# EUROPEAN PATENT APPLICATION

(11) **EP 3 289 928 A1**
(43) Date of publication of application: **07.03.2018**
(21) Application number: 16425088.8
(22) Date of filing: 06.09.2016
(51) Int. Cl.: A47G 19/02, A47J 36/02, B65D 81/26, B65D 81/34

(54) **DISH COMPRISING A BOTTOM EQUIPPED WITH DRAINING AND HOLDING PITS**

(71) Applicant: Italiana Plast S.r.l., 81050 Pastorano (CE) (IT)
(72) Inventor: Iannuzzi, Massimo, I-81050 Pastorano (CE) (IT)
(74) Representative: Garavelli, Paolo

(57) **Abstract**

A dish (1) is described, comprising a bottom (7) equipped with a plurality of pits (9) adapted to perform a function of draining and holding of substances, such as food seasonings, oils or sauces.

## Description

The present invention refers to a dish comprising a bottom equipped with draining and holding pits for foodstuff.

In the foodstuff field, many types of dishes are known, also made of plastics, polystyrene or polypropylene, and also adapted to be used in microwave ovens.

None of the currently marketed dishes is anyway equipped with means which allow draining and holding food seasonings, oils or sauces which often accompany the food contained in such dishes: the result is that such seasonings, oils or sauces stagnate on the dish bottom, not always with an acceptable results for their users.

Object of the present invention is solving the above prior art problems, by providing a dish equipped with means which allow draining and holding part of the food seasonings, oils or sauces which accompany the foods contained therein.

Another object of the present invention is providing a dish as described above, which is simple to make, not costly, but at the same time made of a sturdy and long-lasting material: for such purpose, the dish of the present invention is made of impact-proof polystyrene or polypropylene.

The above and other objects and advantages of the invention, as will result from the following description, are obtained with a dish as claimed in claim 1. Preferred embodiments and non-trivial variations of the present invention are the subject matter of the dependent claims.

It is intended that the enclosed claims are an integral part of the present description.

The present invention will be better described by some preferred embodiments thereof, provided as a non-limiting example, with reference to the enclosed drawings, in which:
- Figure 1 shows a top perspective view of an embodiment of the dish according to the present invention; and
- Figure 2 is a detailed, side sectional view of the bottom of the dish of Figure 1.

With reference to the Figures, a preferred. but absolutely not limiting embodiment of the present invention will be shown and described. It will be immediately obvious to the technicians in the field that numerous variations and modifications (for example related to shape, sizes, arrangements and presetting of parts with equivalent functionality) can be made to what is described, without departing from the scope of the present invention, as defined in the enclosed claims.

As shown in the Figures, the dish 1 of the present invention comprises a bottom 7 equipped with a plurality of pits 9 adapted to perform the function of draining and holding substances.

In particular, such substances can be food seasonings, oils or sauces, or other substances which it is necessary to drain with respect to the main contents of the dish 1.

The pits 9 are preferably arranged in a plurality of rows and columns, covering the whole surface of the bottom 7, and can be of any shape, size and arrangement.

The preferred shape as shown is the hexagonal one, but obviously the pits 9 could be made in a cylindrical or parallelepiped shape, or any other shape suitable for their purpose.

In order to better perform its draining and holding function, the dish 1 of the present invention has its bottom 7 surrounded by a lower smooth annular surface 11, which works as substance collecting element, but also as reinforcing and supporting element for the bottom 7 itself.

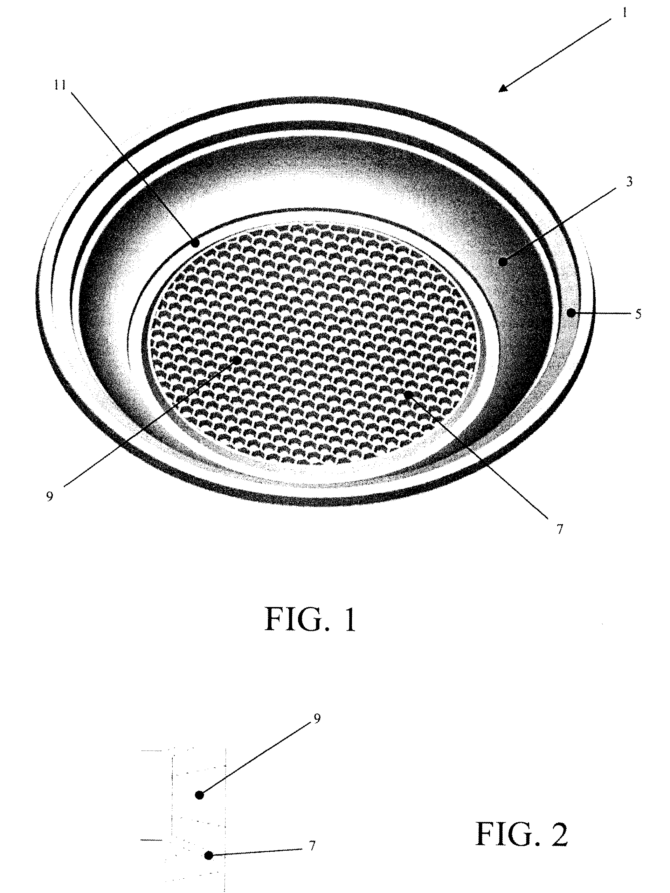

The dish 1 of the present invention can also be equipped (as shown in Figure 1) with a side containing wall 3 connected to the bottom 7 through the lower annular surface 11, such side containing wall 3 being equipped with an external annular edge 5.

In order to obtain some of the objects of the invention, related to manufacturing easiness and low costs, the dish 1 of the present invention can be made of impact-proof polystyrene with a layer of polished crystal polystyrene.

As alternative to the above mentioned material, the dish 1 of the present invention can be made of polypropylene suitable to be used in a microwave oven.

In particular, the dish 1 of the present invention has, as preferred dimensional features, the following:

| | |
|---|---|
| - external diameter: | 220 mm |
| - height: | 3-5 cm |
| - weight: | 18-22 g. |

The above described pits 9 preferably, but absolutely not in a limiting way, have a depth of about 4 mm.

## Claims

1. Dish (1) **characterized in that** it comprises a bottom (7) equipped with a plurality of pits (9) adapted to perform a function of draining and holting substances.

2. Dish (1) according to claim 1, **characterized in that** said substances are food seasonings, oils o sauces.

3. Dish (1) according to claim 1 or 2, **characterized in that** said pits (9) are arranged on a plurality of rows and columns, covering the whole surface of the bottom (7).

4. Dish (1) according to any one of the previous claims, **characterized in that** said pits (9) have an hexagonal shape.

5. Dish (1) according to any one of the previous claims, **characterized in that** said bottom (7) is surrounded by a smooth lower annular surface (11).

6. Dish (1) according to claim 5, **characterized in that** it is equipped with a side containing wall (3) connected to said bottom (7) through said lower annular surface (11), said side containing wall (3) being equipped with an external annular edge (5).

7. Dish (1) according to any one of the previous claims, **characterized in that** it is made of impact-proof polystyrene with a layer of polished crystal polystyrene.

8. Dish (1) according to any one of claims 1 to 6, **characterized in that** it is made of polypropylene suitable to be used in a microwave oven.
